# EUROPEAN PATENT APPLICATION

(11) **EP 4 782 265 A1**
(43) Date of publication of application: **29.07.2026**
(21) Application number: 24881136.6
(22) Date of filing: 30.07.2024
(51) Int. Cl.: B60L 58/10, B60L 15/20, B60L 53/22, B60L 50/60, B60L 3/00, B60L 1/00

(54) **POWER BATTERY SYSTEM AND ELECTRIC VEHICLE**

(30) Priority: 27.10.2023 CN 202311422126
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); YAN, Lei, Shenzhen, Guangdong 518118 (CN); ZHOU, Qiang, Shenzhen, Guangdong 518118 (CN); QIN, Gai, Shenzhen, Guangdong 518118 (CN)
(74) Representative: Taor, Simon Edward William
(86) International application number: PCT/CN2024/108426
(87) International publication number: WO 2025/086765

(57) **Abstract**

An electric vehicle, including a power battery system. The power battery system includes a battery pack and a high-voltage load control module. The high-voltage load control module is configured to control a high-voltage electrical load of a vehicle; and the high-voltage load control module and the battery pack are integrated in a housing.

## Description

### CROSS-REFERENCE TO RELATED APPLICATIONS

This application claims priority to Chinese Patent Application No. 202311422126.3, filed with the China National Intellectual Property Administration on October 27, 2023 and entitled "POWER BATTERY SYSTEM AND ELECTRIC VEHICLE", which is incorporated herein by reference in its entirety.

### TECHNICAL FIELD

This application relates to the field of vehicle technologies, and in particular, to a power battery system and an electric vehicle.

### BACKGROUND

Currently, to improve an integration level of high-voltage systems of electric vehicles, commonly used methods mainly include: integration of an air conditioning system for a battery thermal management system, system coupling under dynamic energy exchange of various subsystems of an electric vehicle integrating a DC/DC converter, integration of energy feedback braking and electrohydraulic braking for different braking and energy conversion mechanisms, integration of a battery pack and a high-voltage electronic control system, and the like.

However, integration of a battery pack and a high-voltage electronic control system is currently limited by components such as a relay, so that the high-voltage electronic control system cannot be integrated into the battery pack. For example, due to impact of components such as a battery pack relay, an alternating current charging relay, and a low-voltage electricity-saving charger on a system integration level, a current integration level of a battery pack and a high-voltage electronic control system is limited to arranging high-voltage electronic control systems such as a compressor controller, a motor control circuit, a charging port circuit, and a low-voltage storage battery charging circuit outside the battery pack, and various relays need to be used separately, so that more effective integration cannot be achieved, thereby taking up a large amount of interior space of the vehicle and increasing safety hazards of the high-voltage systems.

### SUMMARY

This application is intended to resolve at least one of technical problems in the conventional technology.

To this end, an objective of this application is to provide a power battery system. For the power battery system, a high-voltage load control module and a battery pack are integrated in a same housing and share same space, functions are jointly achieved through circuit reuse, and integration of a high-voltage electronic control system and the battery pack is maximized without affecting basic functions of modules, so as to reduce a volume of the power battery system, save interior space of a vehicle, help reduce a probability of safety hazards occurring in the high-voltage system, and improve safety and reliability of the vehicle, thereby better guaranteeing overall performance and stability of the vehicle.

To this end, another objective of this application is to provide an electric vehicle.

To achieve the foregoing objectives, an embodiment according to a first aspect of this application provides a power battery system, including: a battery pack and a high-voltage load control module; the high-voltage load control module is configured to control a high-voltage electrical load of a vehicle; and the high-voltage load control module and the battery pack are integrated in a housing.

For the power battery system according to the embodiment of this application, the high-voltage load control module and the battery pack are integrated in the same housing and share same space, functions are jointly achieved through circuit reuse, and integration of a high-voltage electronic control system and the battery pack is maximized without affecting basic functions of modules, so as to reduce a volume of the power battery system, save interior space of the vehicle, help reduce an occurrence rate of safety hazards of the high-voltage system, and improve safety and reliability of the vehicle, thereby better guaranteeing overall performance and stability of the vehicle.

In addition, the power battery system according to the embodiment of this application may further have the following additional technical features.

In some examples, the high-voltage load control module includes: an alternating current charging module, where the alternating current charging module may be connected to an alternating current charging port, and the alternating current charging module is further connected in parallel to the battery pack.

In some examples, the high-voltage load control module further includes: a compressor controller, where the compressor controller is configured to connect to a compressor of the vehicle.

In some examples, the high-voltage load control module further includes: a buck module, where the buck module is configured to connect to a low-voltage storage battery of the vehicle.

In some examples, the high-voltage load control module further includes: a compressor controller, where the compressor controller is respectively connected in parallel to the battery pack and the alternating current charging module.

In some examples, the high-voltage load control module further includes: a buck module, where the buck module is connected in parallel to the alternating current charging module.

In some examples, the high-voltage load control module further includes: a motor controller, where the motor controller is configured to connect to a drive motor of the vehicle, and the motor controller is further connected in parallel to the battery pack.

In some examples, the battery pack is connected to a direct current charging port of the vehicle.

In some examples, the alternating current charging module includes: a power factor correction (Power Factor Correction, PFC) circuit unit, a rectifier inverter unit, a transformer, and a rectifier circuit unit, where the PFC circuit unit is connected to the alternating current charging port; the rectifier inverter unit is connected in parallel to the PFC circuit unit; a primary winding of the transformer is connected to the rectifier inverter unit; and the rectifier circuit unit is connected to a secondary winding of the transformer.

In some examples, the PFC circuit unit includes: a first thyristor, a second thyristor, a third thyristor, a fourth thyristor, a fifth thyristor, and a sixth thyristor, where a first end of the first thyristor is connected to a live wire of the alternating current charging port, and a second end of the first thyristor is respectively connected to a second end of the second thyristor and a second end of the third thyristor; a first end of the second thyristor is connected to the live wire of the alternating current charging port; a first end of the third thyristor is connected to a neutral wire of the alternating current charging port; a second end of the fourth thyristor is respectively connected to the first end of the first thyristor and the live wire of the alternating current charging port, and a first end of the fourth thyristor is respectively connected to a first end of the fifth thyristor and a first end of the sixth thyristor; a second end of the fifth thyristor is respectively connected to the first end of the second thyristor and the live wire of the alternating current charging port; and a second end of the sixth thyristor is respectively connected to the first end of the third thyristor and the neutral wire of the alternating current charging port.

In some examples, the rectifier inverter unit includes: a seventh thyristor, an eighth thyristor, a ninth thyristor, and a tenth thyristor, where a first end of the seventh thyristor is respectively connected to a second end of the ninth thyristor and one end of the primary winding of the transformer, and a second end of the seventh thyristor is respectively connected to the second end of the third thyristor and a second end of the eighth thyristor; a first end of the eighth thyristor is respectively connected to a second end of the tenth thyristor and the other end of the primary winding of the transformer; and a first end of the ninth thyristor is respectively connected to the first end of the sixth thyristor and a first end of the tenth thyristor.

In some examples, the rectifier circuit unit includes: an eleventh thyristor, a twelfth thyristor, a thirteenth thyristor, and a fourteenth thyristor, where a first end of the eleventh thyristor is respectively connected to a second end of the thirteenth thyristor and one end of the secondary winding of the transformer, and a second end of the eleventh thyristor is connected to a second end of the twelfth thyristor; a first end of the twelfth thyristor is respectively connected to a second end of the fourteenth thyristor and the other end of the secondary winding of the transformer; and a first end of the thirteenth thyristor is connected to a first end of the fourteenth thyristor.

In some examples, the alternating current charging module further includes: a first inductor and a second inductor, where one end of the first inductor is connected to the live wire of the alternating current charging port, and the other end of the first inductor is respectively connected to the first end of the first thyristor and the second end of the fourth thyristor; and one end of the second inductor is respectively connected to the live wire of the alternating current charging port and one end of the first inductor, and the other end of the second inductor is respectively connected to the first end of the second thyristor and the second end of the fifth thyristor.

In some examples, the alternating current charging module further includes: a first capacitor, where one end of the first capacitor is respectively connected to the second end of the third thyristor and the second end of the seventh thyristor, and the other end of the first capacitor is respectively connected to the first end of the sixth thyristor and the first end of the ninth thyristor.

In some examples, the alternating current charging module further includes: a second capacitor, a third capacitor, a third inductor, and a fourth inductor, where the second capacitor and the third inductor are connected in series between the first end of the seventh thyristor and one end of the primary winding of the transformer; and the third capacitor and the fourth inductor are connected in series between the first end of the twelfth thyristor and the other end of the secondary winding of the transformer.

In some examples, the compressor controller includes: a fifteenth thyristor, a sixteenth thyristor, a seventeenth thyristor, and an eighteenth thyristor; a first end of the fifteenth thyristor is respectively connected to a second end of the seventeenth thyristor and a second phase inductor of the compressor, and a second end of the fifteenth thyristor is connected to a second end of the sixteenth thyristor, the second end of the eleventh thyristor, and the second end of the twelfth thyristor; a first end of the sixteenth thyristor is respectively connected to a second end of the eighteenth thyristor and the second phase inductor of the compressor, and a second end of the sixteenth thyristor is connected to the second end of the fifteenth thyristor, the second end of the eleventh thyristor, and the second end of the twelfth thyristor; a first end of the seventeenth thyristor is connected to a first end of the eighteenth thyristor, the first end of the thirteenth thyristor, and the first end of the fourteenth thyristor, and the second end of the seventeenth thyristor is respectively connected to the first end of the fifteenth thyristor and the second phase inductor of the compressor; the first end of the eighteenth thyristor is connected to the first end of the seventeenth thyristor, the first end of the thirteenth thyristor, and the first end of the fourteenth thyristor, and the second end of the eighteenth thyristor is respectively connected to the first end of the sixteenth thyristor and a third phase inductor of the compressor; and the first end of the twelfth thyristor and the second end of the fourteenth thyristor are respectively connected to a first phase inductor of the compressor.

In some examples, the buck module includes: a fifth inductor, a diode, and a MOS transistor, where one end of the fifth inductor is connected to a positive electrode of the low-voltage storage battery, and the other end of the fifth inductor is respectively connected to a drain of the MOS transistor and a cathode of the diode; a source of the MOS transistor is connected to the second end of the first thyristor, the second end of the second thyristor, the second end of the third thyristor, the second end of the seventh thyristor, and the second end of the eighth thyristor; and the cathode of the diode is respectively connected to the other end of the fifth inductor and the drain of the MOS transistor, and an anode of the diode is connected to a negative electrode of the low-voltage storage battery, the first end of the fourth thyristor, the first end of the fifth thyristor, the first end of the sixth thyristor, the first end of the ninth thyristor, and the first end of the tenth thyristor.

In some examples, the motor controller includes: a nineteenth thyristor, a twentieth thyristor, a twenty-first thyristor, a twenty-second thyristor, a twenty-third thyristor, and a twenty-fourth thyristor; a first end of the nineteenth thyristor is respectively connected to a first phase inductor of the drive motor and a second end of the twenty-second thyristor, and a second end of the nineteenth thyristor is connected to the second end of the eleventh thyristor, the second end of the twelfth thyristor, a second end of the twentieth thyristor, a second end of the twenty-first thyristor, and a positive electrode of the battery pack; a first end of the twentieth thyristor is respectively connected to a second phase inductor of the drive motor and a second end of the twenty-third thyristor, and the second end of the twentieth thyristor is connected to the second end of the eleventh thyristor, the second end of the twelfth thyristor, the second end of the nineteenth thyristor, the second end of the twenty-first thyristor, and the positive electrode of the battery pack; a first end of the twenty-first thyristor is respectively connected to a third phase inductor of the drive motor and a second end of the twenty-fourth thyristor, and the second end of the twenty-first thyristor is connected to the second end of the eleventh thyristor, the second end of the twelfth thyristor, the second end of the nineteenth thyristor, the second end of the twentieth thyristor, and the positive electrode of the battery pack; a first end of the twenty-second thyristor is connected to the first end of the thirteenth thyristor, the first end of the fourteenth thyristor, a first end of the twenty-third thyristor, a first end of the twenty-fourth thyristor, and a negative electrode of the battery pack, and the second end of the twenty-second thyristor is respectively connected to the first end of the nineteenth thyristor and the first phase inductor of the drive motor; the first end of the twenty-third thyristor is connected to the first end of the thirteenth thyristor, the first end of the fourteenth thyristor, the first end of the twenty-second thyristor, the first end of the twenty-fourth thyristor, and the negative electrode of the battery pack, and the second end of the twenty-third thyristor is respectively connected to the first end of the twentieth thyristor and the second phase inductor of the drive motor; and the first end of the twenty-fourth thyristor is connected to the first end of the thirteenth thyristor, the first end of the fourteenth thyristor, the first end of the twenty-second thyristor, the first end of the twenty-third thyristor, and the negative electrode of the battery pack, and the second end of the twenty-fourth thyristor is respectively connected to the first end of the twenty-first thyristor and the third phase inductor of the drive motor.

In some examples, the power battery system further includes: a fourth capacitor, where the fourth capacitor is respectively connected in parallel to the alternating current charging module and the compressor controller.

In some examples, the motor controller further includes: a fifth capacitor, where one end of the fifth capacitor is connected to the second end of the nineteenth thyristor, the second end of the twentieth thyristor, and the second end of the twenty-first thyristor, and the other end of the fifth capacitor is connected to the first end of the twenty-second thyristor, the first end of the twenty-third thyristor, and the first end of the twenty-fourth thyristor; and the fifth capacitor is further connected in parallel to the battery pack.

To achieve the foregoing objectives, an embodiment according to a second aspect of this application provides an electric vehicle including the power battery system according to the foregoing embodiment.

For the electric vehicle according to this application, the high-voltage load control module and the battery pack are integrated in the same housing and share same space, functions are jointly achieved through circuit reuse, and integration of a high-voltage electronic control system and the battery pack is maximized without affecting basic functions of modules, so as to reduce a volume of the power battery system, save interior space of the vehicle, help reduce a probability of safety hazards occurring in the high-voltage system, and improve safety and reliability of the vehicle, thereby better guaranteeing overall performance and stability of the vehicle.

Additional aspects and advantages of this application will be in part described in the following descriptions and in part become apparent from the following descriptions, or may be learned from practice of this application.

### BRIEF DESCRIPTION OF DRAWINGS

The above and/or additional aspects and advantages of this application will become apparent and easy to understand from the descriptions of embodiments with reference to the following accompanying drawings, in which:
FIG. 1 is a block diagram of a structure of a power battery system according to an embodiment of this application;
FIG. 2 is a block diagram of a structure of a high-voltage load control module and a connection thereof according to an embodiment of this application;
FIG. 3 is a schematic diagram of an integrated structure of a power battery system according to an embodiment of this application;
FIG. 4 is a schematic diagram of an integrated structure of a compressor controller according to an embodiment of this application;
FIG. 5 is a schematic diagram of an integrated structure of an alternating current charging module according to an embodiment of this application;
FIG. 6 is a schematic diagram of an integrated structure of a motor controller according to an embodiment of this application; and
FIG. 7 is a schematic block diagram of an electric vehicle according to an embodiment of this application.

Reference signs in the drawings:
electric vehicle 1000,
power battery system 100, housing 110, battery pack 120, high-voltage load control module 130, alternating current charging module 140, compressor controller 150, buck module 160, motor controller 170, PFC circuit unit 141, rectifier inverter unit 142, transformer 143, rectifier circuit unit 144, MOS transistor 161, diode 162, low-voltage storage battery 163, compressor 151, drive motor 171,
first thyristor V1, second thyristor V2, third thyristor V3, fourth thyristor V4, fifth thyristor V5, sixth thyristor V6, seventh thyristor V7, eighth thyristor V8, ninth thyristor V9, tenth thyristor V10, eleventh thyristor V11, twelfth thyristor V12, thirteenth thyristor V13, fourteenth thyristor V14, fifteenth thyristor V15, sixteenth thyristor V16, seventeenth thyristor V17, eighteenth thyristor V18, nineteenth thyristor V19, twentieth thyristor V20, twenty-first thyristor V21, twenty-second thyristor V22, twenty-third thyristor V23, twenty-fourth thyristor V24,
first inductor L1, second inductor L2, third inductor L3, fourth inductor L4, fifth inductor L5,
first capacitor C1, second capacitor C2, third capacitor C3, fourth capacitor C4, fifth capacitor C5,
alternating current charging port 200, and direct current charging port 300.

### DESCRIPTION OF EMBODIMENTS

To understand features and technical content of embodiments of this application in more detail, the following describes implementation of the embodiments of this application in detail with reference to the accompanying drawings. The accompanying drawings are for reference and illustration only, and are not intended to limit the embodiments of this application. In the following technical description, for the sake of explanation, multiple details are provided to offer a full understanding of the disclosed embodiments. However, one or more embodiments may still be implemented without these details. In other cases, well-known structures and apparatuses may be presented in a simplified manner to simplify the drawings.

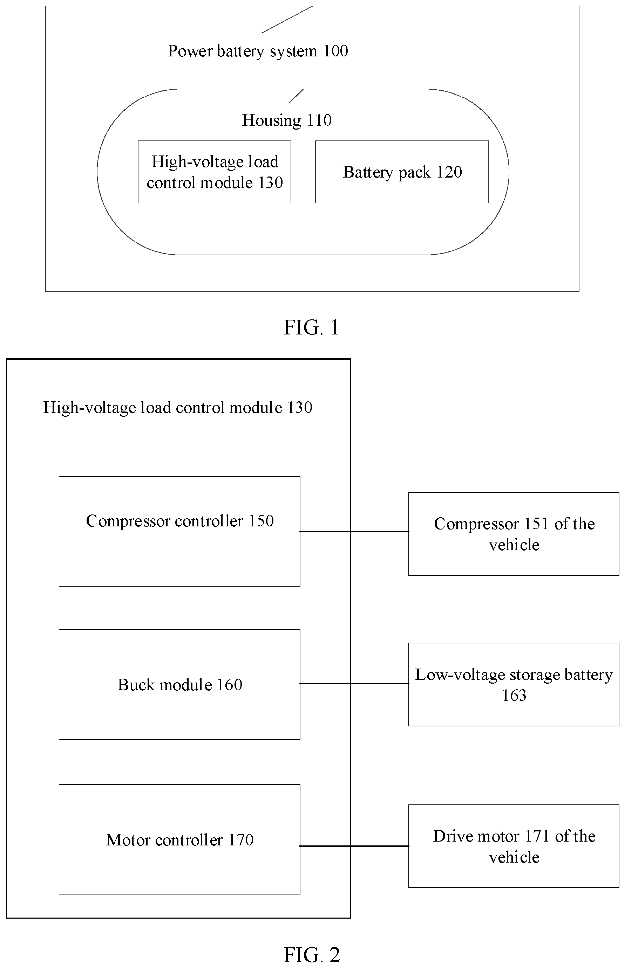

The following describes a power battery system 100 and an electric vehicle 1000 according to embodiments of this application with reference to FIG. 1 to FIG. 7.

FIG. 1 is a block diagram of a structure of a power battery system 100 according to an embodiment of this application. With reference to FIG. 1, the power battery system 100 mainly includes: a battery pack 120 and a high-voltage load control module 130.

The high-voltage load control module 130 is configured to control a high-voltage electrical load of a vehicle.

Specifically, the high-voltage load control module 130 is disposed in the power battery system 100, and configured to control a high-voltage load of the vehicle, including but not limited to controlling a high-voltage load such as a compressor 151 or a drive motor 171 of the vehicle. It may be understood that the high-voltage load control module 130 may implement precise control on the high-voltage load of the vehicle, to ensure safe, stable, and reliable operation of the vehicle. The high-voltage load control module 130 may detect a current value in each high-voltage circuit in real time to adjust and control a current output of the high-voltage load as needed, and may set and control a current output of the high-voltage load based on an actual requirement of the vehicle to satisfy a power requirement of the vehicle to the maximum extent while ensuring high efficiency and low loss. In addition, in case of an abnormal current or load, the high-voltage load control module 130 may take measures such as automatically controlling and reducing a voltage to prevent a circuit from being damaged. In addition, the high-voltage load control module 130 exhibits high interference resistance and reliability during operation to ensure stable operation even in various harsh environments. In conclusion, the high-voltage load control module 130 can provide a high-efficiency, high-reliability, and high-precision solution for control of the high-voltage electrical load of the vehicle, thereby guaranteeing safe, reliable, and efficient operation of the vehicle, and improving safety and reliability of the vehicle.

The high-voltage load control module 130 and the battery pack 120 are integrated in a housing 110.

Specifically, the power battery system 100 is provided with the housing 110, and the high-voltage load control module 130 and the battery pack 120 are integrated in the housing 110, thereby implementing integration of the high-voltage load control module 130 and the battery pack 120. It may be understood that the high-voltage load control module 130 and the battery pack 120 form a functionally complete unit. Integrating the high-voltage load control module 130 and the battery pack 120 in the same housing 110 can reduce a circuit volume, reduce space originally occupied by a battery electronic control system in the vehicle, and reserve more space for another functional component in the vehicle, thereby improving a space utilization rate of the entire vehicle. In addition, integrating the high-voltage load control module 130 and the battery pack 120 in the same housing 110 means a reduction in interfaces among modules, which can reduce fault points, thereby improving reliability of the entire vehicle. Furthermore, integrating the high-voltage load control module 130 and the battery pack 120 in the same housing 110 can lower installation difficulty of the entire module, thereby improving production efficiency and lowering manufacturing costs. Moreover, integrating the high-voltage load control module 130 and the battery pack 120 in the same housing 110 can further improve an integration level of a high-voltage system, so that modules are closer to each other, noise is reduced, and an X capacitance of a circuit may be reduced or eliminated, thereby lowering costs. In conclusion, integrating the high-voltage load control module 130 and the battery pack 120 in the same housing 110 improves production efficiency and cost-effectiveness of the vehicle. In addition, safety and reliability of the vehicle are effectively improved, and overall performance and stability of the vehicle are better guaranteed.

Therefore, for the power battery system 100, the high-voltage load control module 130 and the battery pack 120 are integrated in the same housing 110 and share same space, functions are jointly achieved through circuit reuse, and integration of a high-voltage electronic control system and the battery pack 120 is maximized without affecting basic functions of modules, so as to reduce a volume of the power battery system 100, save interior space of the vehicle, help reduce a probability of safety hazards occurring in the high-voltage system, and improve safety and reliability of the vehicle, thereby better guaranteeing overall performance and stability of the vehicle.

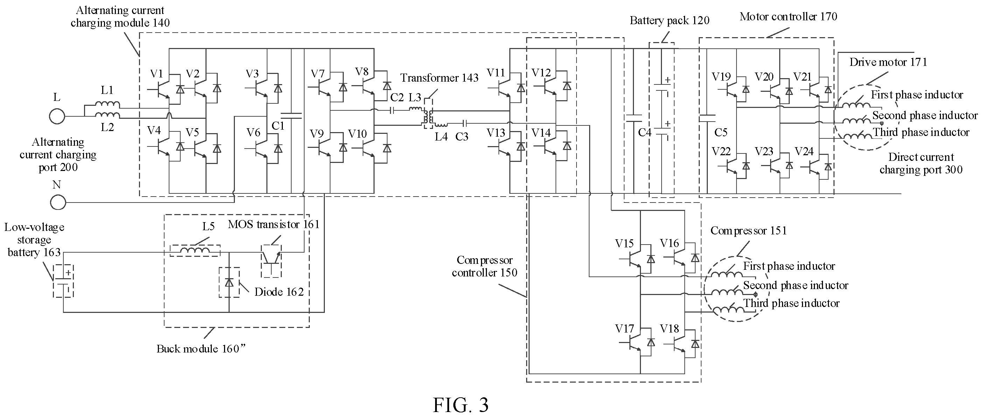

In an embodiment of this application, with reference to FIG. 3, the high-voltage load control module 130 includes: an alternating current charging module 140, where the alternating current charging module 140 may be connected to an alternating current charging port 200, and the alternating current charging module 140 is further connected in parallel to the battery pack 120. In a specific embodiment, the alternating current charging module 140 includes, for example, a direct current/on-board charger (direct current/on-board charger, DC/OBC).

Specifically, the high-voltage load control module 130 includes the alternating current charging module 140. The alternating current charging module 140 may be connected to the alternating current charging port 200 and connected in parallel to the battery pack 120. It may be understood that during charging of the electric vehicle, the alternating current charging port 200 is connected to an interface of an alternating current charging facility (for example, a charging pile). For example, the charging port may be a household outlet, a public charging pile, or the like. The alternating current charging module 140 usually has an ability to identify a type of a charging port and various charging protocols, so as to properly charge a battery. In addition, the alternating current charging module 140 may further control a charging rate to adapt to power of different charging facilities. After the battery pack 120 is connected in parallel to the alternating current charging module 140, charging electric energy may be processed by the alternating current charging module 140, and then input to the battery pack 120. In addition, a protection circuit integrated in the alternating current charging module 140 may be used to ensure safety and reliability of the battery during charging. In conclusion, the alternating current charging module 140 is a component of the high-voltage load control module 130, and can achieve communication with, control of, and protection for an alternating current charging facility. In addition, through parallel connection with the battery pack 120, fast charging and maximized charging efficiency may be achieved, thereby improving charging efficiency and safety.

In an embodiment of this application, with reference to FIG. 2 and FIG. 3, the high-voltage load control module 130 further includes a compressor controller 150, where the compressor controller 150 is configured to connect to the compressor 151 of the vehicle, and the compressor controller 150 is further respectively connected in parallel to the battery pack 120 and the alternating current charging module 140.

Specifically, the high-voltage load control module 130 includes a compressor controller 150. The compressor controller 150 may be connected to the compressor 151 of the vehicle and respectively connected in parallel to the battery pack 120 and the alternating current charging module 140. It may be understood that the compressor controller 150 may obtain electric energy from the battery pack 120 to monitor and manage an operating status of the compressor 151, for example, control start/stop and an operating frequency of the compressor 151, to achieve a predetermined working effect, thereby improving overall operating efficiency and energy saving of the vehicle.

In an embodiment of this application, with reference to FIG. 2 and FIG. 3, the high-voltage load control module 130 further includes a buck module 160, where the buck module 160 is configured to connect to a low-voltage storage battery 163 of the vehicle, and is configured to charge the low-voltage storage battery 163, and the buck module 160 is further connected in parallel to the alternating current charging module 140.

Specifically, the high-voltage load control module 130 includes the buck module 160, and the buck module 160 may be connected to the low-voltage storage battery 163. A main function of the buck module 160 is to charge the low-voltage storage battery 163. In a specific embodiment, the buck module 160 includes a buck circuit, and may specifically include a DC-DC.

In an embodiment of this application, with reference to FIG. 2 and FIG. 3, the high-voltage load control module 130 further includes a motor controller 170, where the motor controller 170 is configured to connect to a drive motor 171 of the vehicle, and the motor controller 170 is further connected in parallel to the battery pack 120. The motor controller 170 is configured to control an operating status of the drive motor 171, and the drive motor 171 is configured to provide a driving force for the vehicle to drive the vehicle.

Specifically, the high-voltage load control module 130 includes the motor controller 170, and the motor controller 170 may be connected to the drive motor 171 of the vehicle. Specifically, the motor controller 170 may monitor and manage the drive motor 171 of the electric vehicle, for example, control start/stop and an operating status of the drive motor 171. In addition, the motor controller 170 may monitor and record parameters such as a voltage and a current of the drive motor 171, and give an alarm in time when a fault occurs, thereby avoiding danger and damage to the electric vehicle and a user. It may be understood that as a core part of a vehicle system, the motor controller 170 can control and manage a power system of the electric vehicle to ensure efficient and stable operation of the vehicle.

In an embodiment of this application, with reference to FIG. 3, the battery pack 120 is connected to a direct current charging port 300 of the vehicle.

Specifically, the direct current charging port 300 may be connected to a direct current charging pile for direct current charging of the battery pack 120. As one of core devices of the electric vehicle, the battery pack 120 is responsible for storing and releasing a large amount of electric energy to power the vehicle. Specifically, during use of the vehicle, an electric quantity of the battery pack 120 gradually depletes. When the electric quantity is low, the battery pack 120 needs to be charged to ensure stable operation. By connecting the direct current charging port 300 and the battery pack 120, a high-voltage direct current from the direct current charging pile may be directly input to the battery pack 120 for direct current charging of the battery pack 120. A connection manner between the battery pack 120 and the direct current charging port 300 of the vehicle includes but is not limited to a plug-in connection. A user simply needs to insert a plug of a charger into the direct current charging port 300 of the vehicle to charge the battery pack 120.

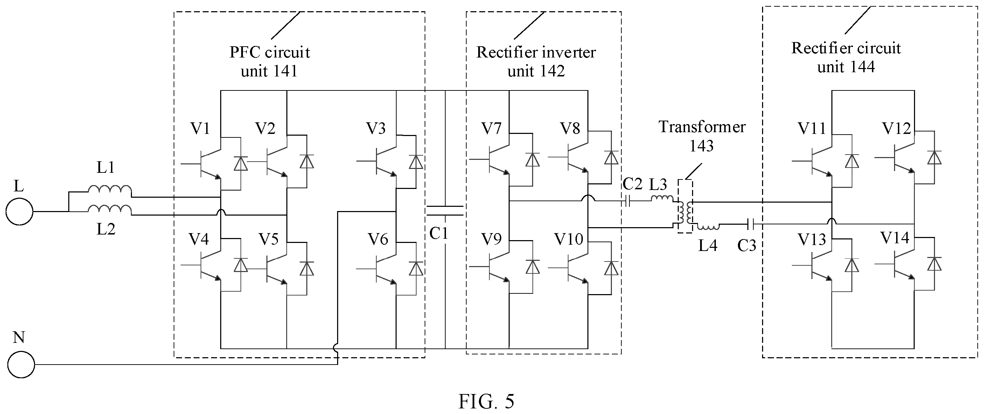

In an embodiment of this application, with reference to FIG. 5, the alternating current charging module 140 includes: a PFC circuit unit 141, a rectifier inverter unit 142, a transformer 143, and a rectifier circuit unit 144. The PFC circuit unit 141 is connected to the alternating current charging port 200, the rectifier inverter unit 142 is connected in parallel to the PFC circuit unit 141, a primary winding of the transformer 143 is connected to the rectifier inverter unit 142, and the rectifier circuit unit 144 is connected to a secondary winding of the transformer 143.

Specifically, the alternating current charging module 140 is a device configured to provide alternating current charging for the battery pack 120, and includes four main components: the PFC circuit unit 141, the rectifier inverter unit 142, the transformer 143, and the rectifier circuit unit 144. The PFC circuit unit 141 is connected to the alternating current charging port 200, and is configured to convert an input alternating current into a direct current, and perform power factor correction to improve an utilization rate of electric energy; the rectifier inverter unit 142 is connected in parallel to the PFC circuit unit 141, and is configured to convert an input direct current into an alternating current; the primary winding of the transformer 143 is connected to the rectifier inverter unit 142, and is configured to further transform (for example, step up or step down) converted electric energy, and output a voltage to the rectifier circuit unit 144; and the rectifier circuit unit 144 is connected to the secondary winding of the transformer 143, and is configured to control an output of electric energy to provide a most suitable charging current and voltage for the electric vehicle. It may be understood that the PFC circuit unit 141 is connected to the alternating current charging port 200, that is, receives an alternating current power input from an input port; the rectifier inverter unit 142 is connected in parallel to the PFC circuit unit 141, that is, the rectifier inverter unit 142 obtains an input voltage from a power supply output by the PFC circuit unit 141; the primary winding of the transformer 143 is connected to the rectifier inverter unit 142, that is, serves as an input of an output voltage of the rectifier inverter unit 142; and the rectifier circuit unit 144 is connected to the secondary winding of the transformer 143, that is, converts an alternating current transformed by the transformer 143 into a direct current, which is then used to charge the battery pack 120. In conclusion, the alternating current charging module 140 may effectively provide an alternating current charging service for the battery pack 120 of the electric vehicle.

In an embodiment of this application, with reference to FIG. 5, the PFC circuit unit 141 includes: a first thyristor V1, a second thyristor V2, a third thyristor V3, a fourth thyristor V4, a fifth thyristor V5, and a sixth thyristor V6. A first end of the first thyristor V1 is connected to a live wire of the alternating current charging port 200, and a second end of the first thyristor V1 is respectively connected to a second end of the second thyristor V2 and a second end of the third thyristor V3; a first end of the second thyristor V2 is connected to the live wire of the alternating current charging port 200; a first end of the third thyristor V3 is connected to a neutral wire of the alternating current charging port 200; a second end of the fourth thyristor V4 is respectively connected to the first end of the first thyristor V1 and the live wire of the alternating current charging port 200, and a first end of the fourth thyristor V4 is respectively connected to a first end of the fifth thyristor V5 and a first end of the sixth thyristor V6; a second end of the fifth thyristor V5 is respectively connected to the first end of the second thyristor V2 and the live wire of the alternating current charging port 200; and a second end of the sixth thyristor V6 is respectively connected to the first end of the third thyristor V3 and the neutral wire of the alternating current charging port 200.

Specifically, the PFC circuit unit 141 is a component of the alternating current charging module 140, and includes six thyristors, which are respectively the first thyristor V1, the second thyristor V2, the third thyristor V3, the fourth thyristor V4, the fifth thyristor V5, and the sixth thyristor V6. Specifically, the first end of the first thyristor V1 is connected to the live wire (namely, an L wire) of the alternating current charging port 200; the second end of the first thyristor V1 is respectively connected to the second end of the second thyristor V2 and the second end of the third thyristor V3; the first end of the second thyristor V2 is connected to the live wire of the alternating current charging port 200; the first end of the third thyristor V3 is connected to the neutral wire of the alternating current charging port 200; the second end of the fourth thyristor V4 is respectively connected to the first end of the first thyristor V1 and the live wire of the alternating current charging port 200, and the first end of the fourth thyristor V4 is respectively connected to the first end of the fifth thyristor V5 and the first end of the sixth thyristor V6; the second end of the fifth thyristor V5 is respectively connected to the first end of the second thyristor V2 and the live wire of the alternating current charging port 200; and the second end of the sixth thyristor V6 is respectively connected to the first end of the third thyristor V3 and the neutral wire (namely, an N wire) of the alternating current charging port 200. This connection manner allows an input alternating current to be converted into a direct current, and allows a reverse-phase interleaved circuit structure to be formed, so that generated bidirectional alternating currents can cancel each other out, thereby eliminating harmonic fluctuations in a power supply, reducing impact on a power grid, improving a power factor of a charging module, and improving utilization efficiency of electric energy. In a specific embodiment, third ends (namely, control ends) of the first thyristor V1, the second thyristor V2, the third thyristor V3, the fourth thyristor V4, the fifth thyristor V5, and the sixth thyristor V6 are all connected to a micro controller unit (Micro Controller Unit, MCU) (not shown in the figure) of the high-voltage system, and may receive a control signal (such as a pulse width modulation (Pulse Width Modulation, PWM) signal) sent by the micro controller unit to turn on or turn off.

In an embodiment of this application, with reference to FIG. 5, the rectifier inverter unit 142 includes: a seventh thyristor V7, an eighth thyristor V8, a ninth thyristor V9, and a tenth thyristor V10. A first end of the seventh thyristor V7 is respectively connected to a second end of the ninth thyristor V9 and one end of the primary winding of the transformer 143, and a second end of the seventh thyristor V7 is respectively connected to the second end of the third thyristor V3 and a second end of the eighth thyristor V8; a first end of the eighth thyristor V8 is respectively connected to a second end of the tenth thyristor V10 and the other end of the primary winding of the transformer 143; and a first end of the ninth thyristor V9 is respectively connected to the first end of the sixth thyristor V6 and a first end of the tenth thyristor V10.

Specifically, the rectifier inverter unit 142 is a component of the alternating current charging module 140, and includes four thyristors, which are respectively the seventh thyristor V7, the eighth thyristor V8, the ninth thyristor V9, and the tenth thyristor V10. Specifically, the first end of the seventh thyristor V7 is respectively connected to the second end of the ninth thyristor V9 and one end of the primary winding of the transformer 143, and the second end of the seventh thyristor V7 is respectively connected to the second end of the third thyristor V3 and the second end of the eighth thyristor V8; the first end of the eighth thyristor V8 is respectively connected to the second end of the tenth thyristor V10 and the other end of the primary winding of the transformer 143; and the first end of the ninth thyristor V9 is respectively connected to the first end of the sixth thyristor V6 and the first end of the tenth thyristor V10. In this connection manner, an input direct current may be converted into an alternating current. In addition, the transformer 143 is disposed between the rectifier inverter unit 142 and the rectifier circuit unit 144 to play a role of isolation, thereby effectively reducing losses of switching devices under high-frequency power. In a specific embodiment, third ends (namely, control ends) of the seventh thyristor V7, the eighth thyristor V8, the ninth thyristor V9, and the tenth thyristor V10 are all connected to the micro controller unit (not shown in the figure) of the high-voltage system, and may receive a control signal (such as a PWM signal) sent by the micro controller unit to turn on or turn off.

In an embodiment of this application, with reference to FIG. 5, the rectifier circuit unit 144 includes: an eleventh thyristor V11, a twelfth thyristor V12, a thirteenth thyristor V13, and a fourteenth thyristor V14. A first end of the eleventh thyristor V11 is respectively connected to a second end of the thirteenth thyristor V13 and one end of the secondary winding of the transformer 143, and a second end of the eleventh thyristor V11 is connected to a second end of the twelfth thyristor V12; a first end of the twelfth thyristor V12 is respectively connected to a second end of the fourteenth thyristor V14 and the other end of the secondary winding of the transformer 143; and a first end of the thirteenth thyristor V13 is connected to a first end of the fourteenth thyristor V14.

Specifically, the rectifier circuit unit 144 is a component of the alternating current charging module 140, and includes four thyristors, which are respectively the eleventh thyristor V11, the twelfth thyristor V12, the thirteenth thyristor V13, and the fourteenth thyristor V14. In this circuit structure, the first end of the eleventh thyristor V11 is respectively connected to the second end of the thirteenth thyristor V13 and one end of the secondary winding of the transformer 143, and the second end of the eleventh thyristor V11 is connected to the second end of the twelfth thyristor V12; the first end of the twelfth thyristor V12 is respectively connected to the second end of the fourteenth thyristor V14 and the other end of the secondary winding of the transformer 143; and the first end of the thirteenth thyristor V13 is connected to the first end of the fourteenth thyristor V14. In this connection manner, a main function of the rectifier circuit unit 144 is to convert an alternating current transformed by the transformer 143 into a direct current, which is then used to charge the battery pack 120. In addition, a currently input current is controlled by using thyristors, so that on-line regulation of a voltage and a current can be achieved, thereby avoiding an excessively high or excessively low current, and ensuring safety and stability during charging. In a specific embodiment, third ends (namely, control ends) of the eleventh thyristor V11, the twelfth thyristor V12, the thirteenth thyristor V13, and the fourteenth thyristor V14 are all connected to the micro controller unit (not shown in the figure) of the high-voltage system, and may receive a control signal (such as a PWM signal) sent by the micro controller unit to turn on or turn off.

In an embodiment of this application, with reference to FIG. 5, the alternating current charging module 140 further includes a first inductor L1 and a second inductor L2. One end of the first inductor L1 is connected to the live wire of the alternating current charging port 200, and the other end of the first inductor L1 is respectively connected to the first end of the first thyristor V1 and the second end of the fourth thyristor V4. One end of the second inductor L2 is respectively connected to the live wire of the alternating current charging port 200 and one end of the first inductor L1, and the other end of the second inductor L2 is respectively connected to the first end of the second thyristor V2 and the second end of the fifth thyristor V5.

Specifically, the first inductor L1 and the second inductor L2 are two inductor elements of the alternating current charging module 140, one end of the first inductor L1 is connected to the live wire (namely, the L wire) of the alternating current charging port 200, and the other end of the first inductor L1 is respectively connected to the first end of the first thyristor V1 and the second end of the fourth thyristor V4; one end of the second inductor L2 is respectively connected to the live wire of the alternating current charging port 200 and one end of the first inductor L1, and the other end of the second inductor L2 is respectively connected to the first end of the second thyristor V2 and the second end of the fifth thyristor V5. The first inductor L1 and the second inductor L2 are mainly configured to reduce ripple, minimize high-frequency ripple in an input current, output a low-ripple current, reduce current oscillation, and smoothly input electric energy into a charging system. Specifically, the first inductor L1 also plays a role in current limiting, and generates a reverse electromagnetic force when a current suddenly increases, to limit an increase in the current, thereby protecting the system. In addition, the second inductor L2 also plays a role in smoothing input electric energy, and smoothly outputs the input electric energy to prevent voltage and current fluctuations, thereby ensuring safety and reliability of the charging system.

In an embodiment of this application, with reference to FIG. 5, the alternating current charging module 140 further includes a first capacitor C1, where one end of the first capacitor C1 is respectively connected to the second end of the third thyristor V3 and the second end of the seventh thyristor V7, and the other end of the first capacitor C1 is respectively connected to the first end of the sixth thyristor V6 and the first end of the ninth thyristor V9.

Specifically, the first capacitor C1 is a capacitor element of the alternating current charging module 140, one end of the first capacitor C1 is respectively connected to the second end of the third thyristor V3 and the second end of the seventh thyristor V7, and the other end of the first capacitor C1 is respectively connected to the first end of the sixth thyristor V6 and the first end of the ninth thyristor V9. Specifically, main functions of the first capacitor C1 are filtering and voltage regulation. By filtering and limiting voltage fluctuations, stability and safety of the charging system are ensured. For example, when an input voltage suddenly changes or fluctuates, the first capacitor C1 filters, smooths, and limits the input voltage, so that an output voltage and current can be stably and safely processed, thereby ensuring normal operation of an alternating current charging system, and preventing damage to a charging device.

In an embodiment of this application, with reference to FIG. 5, the alternating current charging module 140 further includes a second capacitor C2, a third capacitor C3, a third inductor L3, and a fourth inductor L4. The second capacitor C2 and the third inductor L3 are connected in series between the first end of the seventh thyristor V7 and one end of the primary winding of the transformer 143; and the third capacitor C3 and the fourth inductor L4 are connected in series between the first end of the twelfth thyristor V12 and the other end of the secondary winding of the transformer 143. The second capacitor C2, the third inductor L3, the third capacitor C3, and the fourth inductor L4 together form a symmetric CL-LC circuit.

Specifically, the second capacitor C2, the third capacitor C3, the third inductor L3, and the fourth inductor L4 are four capacitor and inductor elements of the alternating current charging module 140. The second capacitor C2 and the third inductor L3 are connected in series between the first end of the seventh thyristor V7 and one end of the primary winding of the transformer 143, and mainly serve to control and limit a current and a voltage at an input port of the alternating current charging module 140, so that conversion and input of electric energy can be stably and sufficiently guaranteed, thereby avoiding interference and damage to the system due to current and voltage fluctuations. The third capacitor C3 and the fourth inductor L4 are connected in series between the first end of the twelfth thyristor V12 and the other end of the secondary winding of the transformer 143, and mainly serve to control and protect a current and a voltage at an output port, so as to avoid interference and damage to the charging device due to current and voltage fluctuations, thereby ensuring stability and safety of the charging system. It may be understood that a capacitor and an inductor are connected in series mainly to bypass a resonance point of a harmonic, avoid harmonic amplification and overcurrent damage to the capacitor, limit an input inrush current, and adjust the resonance point to a harmonic frequency, so as to filter out the harmonic.

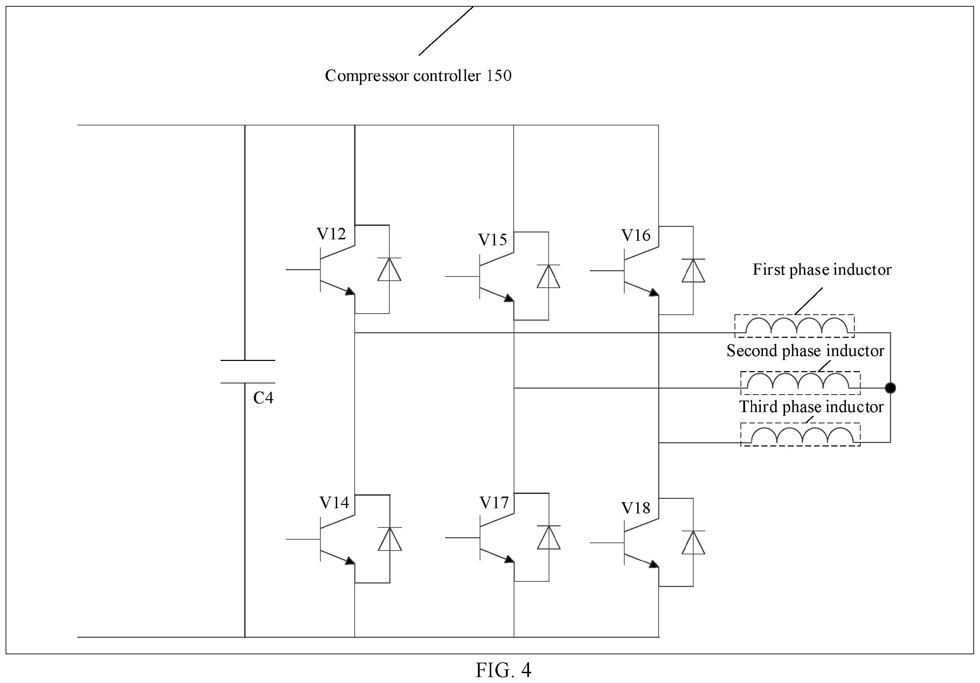

In an embodiment of this application, with reference to FIG. 4, the compressor controller 150 includes: a fifteenth thyristor V15, a sixteenth thyristor V16, a seventeenth thyristor V17, and an eighteenth thyristor V18. A first end of the fifteenth thyristor V15 is respectively connected to a second end of the seventeenth thyristor V17 and a second phase inductor of the compressor 151, and a second end of the fifteenth thyristor V15 is connected to a second end of the sixteenth thyristor V16, the second end of the eleventh thyristor V11, and the second end of the twelfth thyristor V12; a first end of the sixteenth thyristor V16 is respectively connected to a second end of the eighteenth thyristor V18 and the second phase inductor of the compressor 151, and a second end of the sixteenth thyristor V16 is connected to the second end of the fifteenth thyristor V15, the second end of the eleventh thyristor V11, and the second end of the twelfth thyristor V12; a first end of the seventeenth thyristor V17 is connected to a first end of the eighteenth thyristor V18, the first end of the thirteenth thyristor V13, and the first end of the fourteenth thyristor V14, and the second end of the seventeenth thyristor V17 is respectively connected to the first end of the fifteenth thyristor V15 and the second phase inductor of the compressor 151; the first end of the eighteenth thyristor V18 is connected to the first end of the seventeenth thyristor V17, the first end of the thirteenth thyristor V13, and the first end of the fourteenth thyristor V14, and the second end of the eighteenth thyristor V18 is respectively connected to the first end of the sixteenth thyristor V16 and a third phase inductor of the compressor 151; and the first end of the twelfth thyristor V12 and the second end of the fourteenth thyristor V14 are respectively connected to a first phase inductor of the compressor 151.

Specifically, the compressor controller 150 is mainly configured to control the compressor 151, and the compressor controller 150 mainly includes the fifteenth thyristor V15, the sixteenth thyristor V16, the seventeenth thyristor V17, and the eighteenth thyristor V18. Specifically, connection manners adopted by the fifteenth thyristor V15, the sixteenth thyristor V16, the seventeenth thyristor V17, and the eighteenth thyristor V18 are mainly used to control and protect an operating status of the compressor 151. For example, an operating status (such as start/stop and operating power) of the compressor 151 is controlled by controlling turn-on and turn-off of the fifteenth thyristor V15, the sixteenth thyristor V16, the seventeenth thyristor V17, the eighteenth thyristor V18, and the twelfth thyristor V12 and the fourteenth thyristor V14 that are shared with the alternating current charging module 140. When the twelfth thyristor V12, the fifteenth thyristor V15, the sixteenth thyristor V16, and/or the fourteenth thyristor V14, the seventeenth thyristor V17, and the eighteenth thyristor V18 are turned off, no current flows through the compressor 151, and thus the compressor 151 stops operation; and when the twelfth thyristor V12, the fifteenth thyristor V15, the sixteenth thyristor V16, and/or the fourteenth thyristor V14, the seventeenth thyristor V17, and the eighteenth thyristor V18 are normally turned on according to a control signal from the micro controller unit, the compressor 151 operates normally for cooling or heating. In a specific embodiment, third ends (namely, control ends) of the fifteenth thyristor V15, the sixteenth thyristor V16, the seventeenth thyristor V17, and the eighteenth thyristor V18 are all connected to the micro controller unit (not shown in the figure) of the high-voltage system, and may receive a control signal (such as a PWM signal) sent by the micro controller unit to turn on or turn off.

In an embodiment of this application, with reference to FIG. 3, the buck module 160 includes: a fifth inductor L5, a diode 162, and a MOS transistor 161. One end of the fifth inductor L5 is connected to a positive electrode of the low-voltage storage battery 163, and the other end of the fifth inductor L5 is respectively connected to a drain of the MOS transistor 161 and a cathode of the diode 162; a source of the MOS transistor 161 is connected to the second end of the first thyristor V1, the second end of the second thyristor V2, the second end of the third thyristor V3, the second end of the seventh thyristor V7, and the second end of the eighth thyristor V8; the cathode of the diode 162 is respectively connected to the other end of the fifth inductor L5 and the drain of the MOS transistor 161, and an anode of the diode 162 is connected to the negative electrode of the low-voltage storage battery 163, the first end of the fourth thyristor V4, the first end of the fifth thyristor V5, the first end of the sixth thyristor V6, the first end of the ninth thyristor V9, and the first end of the tenth thyristor V10.

Specifically, the buck module 160 includes the fifth inductor L5, the diode 162, and the MOS transistor 161, and mainly serves to achieve step-down and voltage regulation for a circuit, thereby ensuring voltage stability and balance during charging. One end of the fifth inductor L5 is connected to the positive electrode of the low-voltage storage battery 163, and the other end is respectively connected to the drain of the MOS transistor 161 and the cathode of the diode 162; the source of the MOS transistor 161 is connected to the second end of the first thyristor V1, the second end of the second thyristor V2, the second end of the third thyristor V3, the second end of the seventh thyristor V7, and the second end of the eighth thyristor V8; the cathode of the diode 162 is respectively connected to the other end of the fifth inductor L5 and the drain of the MOS transistor 161, and the anode of the diode 162 is connected to the negative electrode of the low-voltage storage battery 163, the first end of the fourth thyristor V4, the first end of the fifth thyristor V5, the first end of the sixth thyristor V6, the first end of the ninth thyristor V9, and the first end of the tenth thyristor V10. In this connection manner, during charging, after the MOS transistor 161 in the buck module 160 is turned on, the charging system may charge the fifth inductor L5, and the fifth inductor L5 performs voltage division, thereby implementing a function of stepping down the charging system for stably charging the low-voltage storage battery 163. After the MOS transistor 161 in the buck module 160 is turned off, power may be supplied by the fifth inductor L5. The diode 162 is configured to form a loop, and a current may flow back to the low-voltage storage battery 163 through the diode 162, thereby protecting circuit elements from being damaged by the current, and facilitating effective storage of generated electric energy in the low-voltage storage battery 163 for power supply when needed.

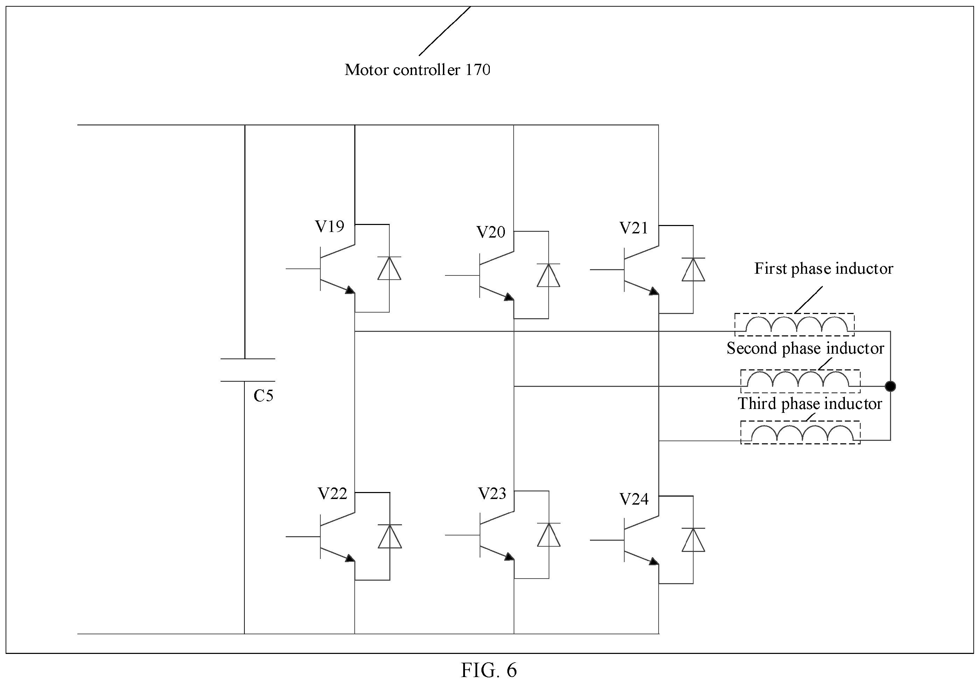

In an embodiment of this application, with reference to FIG. 6, the motor controller 170 includes: a nineteenth thyristor V19, a twentieth thyristor V20, a twenty-first thyristor V21, a twenty-second thyristor V22, a twenty-third thyristor V23, and a twenty-fourth thyristor V24. A first end of the nineteenth thyristor V19 is respectively connected to a first phase inductor of the drive motor 171 and a second end of the twenty-second thyristor V22, and a second end of the nineteenth thyristor V19 is connected to the second end of the eleventh thyristor V11, the second end of the twelfth thyristor V12, a second end of the twentieth thyristor V20, a second end of the twenty-first thyristor V21, and a positive electrode of the battery pack 120; a first end of the twentieth thyristor V20 is respectively connected to a second phase inductor of the drive motor 171 and a second end of the twenty-third thyristor V23, and the second end of the twentieth thyristor V20 is connected to the second end of the eleventh thyristor V11, the second end of the twelfth thyristor V12, the second end of the nineteenth thyristor V19, the second end of the twenty-first thyristor V21, and the positive electrode of the battery pack 120; a first end of the twenty-first thyristor V21 is respectively connected to a third phase inductor of the drive motor 171 and a second end of the twenty-fourth thyristor V24, and the second end of the twenty-first thyristor V21 is connected to the second end of the eleventh thyristor V11, the second end of the twelfth thyristor V12, the second end of the nineteenth thyristor V19, the second end of the twentieth thyristor V20, and the positive electrode of the battery pack 120; a first end of the twenty-second thyristor V22 is connected to the first end of the thirteenth thyristor V13, the first end of the fourteenth thyristor V14, a first end of the twenty-third thyristor V23, a first end of the twenty-fourth thyristor V24, and a negative electrode of the battery pack 120, and the second end of the twenty-second thyristor V22 is respectively connected to the first end of the nineteenth thyristor V19 and the first phase inductor of the drive motor 171; the first end of the twenty-third thyristor V23 is connected to the first end of the thirteenth thyristor V13, the first end of the fourteenth thyristor V14, the first end of the twenty-second thyristor V22, the first end of the twenty-fourth thyristor V24, and the negative electrode of the battery pack 120, and the second end of the twenty-third thyristor V23 is respectively connected to the first end of the twentieth thyristor V20 and the second phase inductor of the drive motor 171; and the first end of the twenty-fourth thyristor V24 is connected to the first end of the thirteenth thyristor V13, the first end of the fourteenth thyristor V14, the first end of the twenty-second thyristor V22, the first end of the twenty-third thyristor V23, and the negative electrode of the battery pack 120, and the second end of the twenty-fourth thyristor V24 is respectively connected to the first end of the twenty-first thyristor V21 and the third phase inductor of the drive motor 171.

Specifically, the motor controller 170 includes the nineteenth thyristor V19, the twentieth thyristor V20, the twenty-first thyristor V21, the twenty-second thyristor V22, the twenty-third thyristor V23, and the twenty-fourth thyristor V24. Specifically, connection manners adopted by the nineteenth thyristor V19, the twentieth thyristor V20, the twenty-first thyristor V21, the twenty-second thyristor V22, the twenty-third thyristor V23, and the twenty-fourth thyristor V24 are mainly used to accurately and stably control a current of the drive motor 171, thereby ensuring efficient, safe, stable and reliable operation of a drive system of the electric vehicle. For example, an operating status (such as start/stop and operating power) of the drive motor 171 is controlled by controlling turn-on and turn-off of the nineteenth thyristor V19, the twentieth thyristor V20, the twenty-first thyristor V21, the twenty-second thyristor V22, the twenty-third thyristor V23, and the twenty-fourth thyristor V24. When the nineteenth thyristor V19, the twentieth thyristor V20, the twenty-first thyristor V21, and/or the twenty-second thyristor V22, the twenty-third thyristor V23, and the twenty-fourth thyristor V24 are turned off, no current flows through the drive motor 171, and thus the drive motor 171 stops operation; and when the nineteenth thyristor V19, the twentieth thyristor V20, the twenty-first thyristor V21, the twenty-second thyristor V22, the twenty-third thyristor V23, and the twenty-fourth thyristor V24 are normally turned on according to a control signal from the micro controller unit, the drive motor 171 operates normally to drive the vehicle. In a specific embodiment, third ends (namely, control ends) of the nineteenth thyristor V19, the twentieth thyristor V20, the twenty-first thyristor V21, the twenty-second thyristor V22, the twenty-third thyristor V23, and the twenty-fourth thyristor V24 are all connected to the micro controller unit (not shown in the figure), and may receive a control signal (such as a PWM signal) sent by the micro controller unit to turn on or turn off.

In an embodiment of this application, the power battery system 100 further includes: a fourth capacitor C4, where the fourth capacitor C4 is respectively connected in parallel to the alternating current charging module 140 and the compressor controller 150.

Specifically, with reference to FIG. 3, the power battery system 100 further includes the fourth capacitor C4 connected in parallel to the alternating current charging module 140 and the compressor controller 150. Specifically, the alternating current charging module 140 and the compressor controller 150 may share the fourth capacitor C4 to filter a current and control voltage balance, thereby ensuring stable operation of the charging device.

In an embodiment of this application, the motor controller 170 further includes: a fifth capacitor C5, where one end of the fifth capacitor C5 is connected to the second end of the nineteenth thyristor V19, the second end of the twentieth thyristor V20, and the second end of the twenty-first thyristor V21, and the other end of the fifth capacitor C5 is connected to the first end of the twenty-second thyristor V22, the first end of the twenty-third thyristor V23, and the first end of the twenty-fourth thyristor V24; and the fifth capacitor C5 is further connected in parallel to the battery pack 120.

Specifically, with reference to FIG. 6, the motor controller 170 includes a fifth capacitor C5, and a connection manner thereof is mainly for filtering and voltage regulation. By filtering and limiting voltage fluctuations, stability and safety of the charging system are ensured. For example, when a voltage suddenly changes or fluctuates, the fifth capacitor C5 filters, smooths, and limits the voltage, so that an output voltage and current can be stably and safely processed, thereby guaranteeing normal operation of a motor and the battery pack 120, and preventing damage to the motor and the battery pack 120.

In conclusion, for the power battery system 100 according to the embodiment of this application, the high-voltage load module 130 and the battery pack 120 are integrated in the same housing 110 and share the same space, and functions are jointly achieved through circuit reuse and a preset control algorithm. In addition, the battery electronic control system is integrated to a maximum extent without affecting basic functions of modules, and passive discharge resistors for all high-voltage modules are removed, so that the modules are closer to each other, noise is reduced, and X capacitors in a circuit may be reduced or removed, thereby lowering costs. In addition, tubing parts of the compressor and the OBC are integrated, and thyristors are used instead of relays, which reduces a circuit volume, improves a system integration level, saves interior space of the vehicle, reduces a probability of safety hazards occurring in the vehicle system, and enhances safety performance of the vehicle in a safety test such as a crash test, thereby improving safety and reliability of the vehicle, improving driving experience of a user, and better guaranteeing overall performance and stability of the vehicle.

A further embodiment of this application provides an electric vehicle 1000.

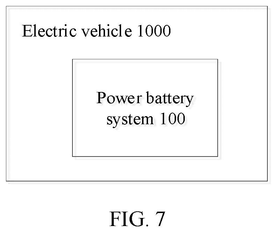

In some embodiments, as shown in FIG. 7, the electric vehicle 1000 includes: the power battery system 100 according to any one of the foregoing embodiments of this application.

For the electric vehicle 1000 according to this application, the high-voltage load module 130 and the battery pack 120 are integrated in the same housing 110 and share the same space, and functions are jointly achieved through circuit reuse and a preset control algorithm. In addition, the battery electronic control system is integrated to a maximum extent without affecting basic functions of modules, and passive discharge resistors for all high-voltage modules are removed, so that the modules are closer to each other, noise is reduced, and X capacitors in a circuit may be reduced or removed, thereby lowering costs. In addition, tubing parts of the compressor and the OBC are integrated, and thyristors are used instead of relays, which reduces a circuit volume, improves a system integration level, saves interior space of the vehicle, reduces a probability of safety hazards occurring in the vehicle system, and enhances safety performance of the vehicle in a safety test such as a crash test, thereby improving safety and reliability of the vehicle, improving driving experience of a user, and better guaranteeing overall performance and stability of the vehicle.

In the description of the specification, the description with reference to the terms "an embodiment", "some embodiments", "illustrative embodiment", "example", "specific example", "some examples", or the like means that a specific feature, structure, material or characteristic described in connection with the embodiment or example is included in at least one embodiment or example of this application. In the specification, the schematic representations of the above terms do not necessarily refer to the same embodiment or example.

Although the embodiments of this application have been illustrated and described, those of ordinary skill in the art will appreciate that various changes, modifications, substitutions, and variations may be made to these embodiments without departing from the principle and purpose of this application. The scope of this application is defined by the claims and equivalents thereof.

## Claims

1. A power battery system (100), comprising:
a battery pack (120); and
a high-voltage load control module (130), the high-voltage load control module (130) being configured to control a high-voltage electrical load of a vehicle, and the high-voltage load control module (130) and the battery pack (120) being integrated in a housing (110).

2. The power battery system (100) according to claim 1, wherein the high-voltage load control module (130) comprises:
an alternating current charging module (140), the alternating current charging module (140) being connected to an alternating current charging port (200), and the alternating current charging module (140) being further connected in parallel to the battery pack (120).

3. The power battery system (100) according to claim 1 or 2, wherein the high-voltage load control module (130) further comprises:
a compressor controller (150), the compressor controller (150) being configured to connect to a compressor (151) of the vehicle.

4. The power battery system (100) according to any one of claims 1 to 3, wherein the high-voltage load control module (130) further comprises:
a buck module (160), the buck module (160) being configured to connect to a low-voltage storage battery (163) of the vehicle.

5. The power battery system (100) according to claim 2, wherein the high-voltage load control module (130) further comprises:
a compressor controller (150), the compressor controller (150) being respectively connected in parallel to the battery pack (120) and the alternating current charging module (140).

6. The power battery system (100) according to claim 2 or 4, wherein the high-voltage load control module (130) further comprises:
a buck module (160) being connected in parallel to the alternating current charging module (140).

7. The power battery system (100) according to any one of claims 1 to 6, wherein the high-voltage load control module (130) further comprises:
a motor controller (170), the motor controller (170) being configured to connect to a drive motor (171) of the vehicle, and the motor controller (170) being further connected in parallel to the battery pack (120).

8. The power battery system (100) according to any one of claims 1 to 7, wherein the battery pack (120) is connected to a direct current charging port (300) of the vehicle.

9. The power battery system (100) according to claim 2 or 5, wherein the alternating current charging module (140) comprises:
a PFC circuit unit (141), the PFC circuit unit (141) being connected to the alternating current charging port (200);
a rectifier inverter unit (142), the rectifier inverter unit (142) being connected in parallel to the PFC circuit unit (141);
a transformer (143), a primary winding of the transformer (143) being connected to the rectifier inverter unit (142); and
a rectifier circuit unit (144), the rectifier circuit unit (144) being connected to a secondary winding of the transformer (143).

10. The power battery system (100) according to claim 9, wherein the PFC circuit unit (141) comprises: a first thyristor (V1), a second thyristor (V2), a third thyristor (V3), a fourth thyristor (V4), a fifth thyristor (V5), and a sixth thyristor (V6);
a first end of the first thyristor (V1) is connected to a live wire of the alternating current charging port (200), and a second end of the first thyristor (V1) is respectively connected to a second end of the second thyristor (V2) and a second end of the third thyristor (V3);
a first end of the second thyristor (V2) is connected to a live wire of the alternating current charging port (200);
a first end of the third thyristor (V3) is connected to a neutral wire of the alternating current charging port (200);
a second end of the fourth thyristor (V4) is respectively connected to the first end of the first thyristor (V1) and the live wire of the alternating current charging port (200), and a first end of the fourth thyristor (V4) is respectively connected to a first end of the fifth thyristor (V5) and a first end of the sixth thyristor (V6);
a second end of the fifth thyristor (V5) is respectively connected to the first end of the second thyristor (V2) and the live wire of the alternating current charging port (200); and
a second end of the sixth thyristor (V6) is respectively connected to the first end of the third thyristor (V3) and the neutral wire of the alternating current charging port (200).

11. The power battery system (100) according to claim 10, wherein the rectifier inverter unit (142) comprises: a seventh thyristor (V7), an eighth thyristor (V8), a ninth thyristor (V9), and a tenth thyristor (V10);
a first end of the seventh thyristor (V7) is respectively connected to a second end of the ninth thyristor (V9) and one end of the primary winding of the transformer (143), and a second end of the seventh thyristor (V7) is respectively connected to the second end of the third thyristor (V3) and a second end of the eighth thyristor (V8);
a first end of the eighth thyristor (V8) is respectively connected to a second end of the tenth thyristor (V10) and the other end of the primary winding of the transformer (143); and
a first end of the ninth thyristor (V9) is respectively connected to the first end of the sixth thyristor (V6) and a first end of the tenth thyristor (V10).

12. The power battery system (100) according to claim 11, wherein the rectifier circuit unit (144) comprises: an eleventh thyristor (V11), a twelfth thyristor (V12), a thirteenth thyristor (V13), and a fourteenth thyristor (V14);
a first end of the eleventh thyristor (V11) is respectively connected to a second end of the thirteenth thyristor (V13) and one end of the secondary winding of the transformer (143), and a second end of the eleventh thyristor (V11) is connected to a second end of the twelfth thyristor (V12);
a first end of the twelfth thyristor (V12) is respectively connected to a second end of the fourteenth thyristor (V14) and the other end of the secondary winding of the transformer (143); and
a first end of the thirteenth thyristor (V13) is connected to a first end of the fourteenth thyristor (V14).

13. The power battery system (100) according to claim 12, wherein the alternating current charging module (140) further comprises:
a first inductor (L1), one end of the first inductor (L1) being connected to the live wire of the alternating current charging port (200), and the other end of the first inductor (L1) being respectively connected to the first end of the first thyristor (V1) and the second end of the fourth thyristor (V4); and
a second inductor (L2), one end of the second inductor (L2) being respectively connected to the live wire of the alternating current charging port (200) and one end of the first inductor (L1), and the other end of the second inductor (L2) being respectively connected to the first end of the second thyristor (V2) and the second end of the fifth thyristor (V5).

14. The power battery system (100) according to claim 12 or 13, wherein the alternating current charging module (140) further comprises:
a first capacitor (C1), one end of the first capacitor (C1) being respectively connected to the second end of the third thyristor (V3) and the second end of the seventh thyristor (V7), and the other end of the first capacitor (C1) being respectively connected to the first end of the sixth thyristor (V6) and the first end of the ninth thyristor (V9).

15. The power battery system (100) according to any one of claims 12 to 14, wherein the alternating current charging module (140) further comprises: a second capacitor (C2), a third capacitor (C3), a third inductor (L3), and a fourth inductor (L4);
the second capacitor (C2) and the third inductor (L3) are connected in series between the first end of the seventh thyristor (V7) and one end of the primary winding of the transformer (143); and
the third capacitor (C3) and the fourth inductor (L4) are connected in series between the first end of the twelfth thyristor (V12) and the other end of the secondary winding of the transformer (143).

16. The power battery system (100) according to any one of claims 12 to 15, wherein the compressor controller (150) comprises: a fifteenth thyristor (V15), a sixteenth thyristor (V16), a seventeenth thyristor (V17), and an eighteenth thyristor (V18);
a first end of the fifteenth thyristor (V15) is respectively connected to a second end of the seventeenth thyristor (V17) and a second phase inductor of the compressor (151), and a second end of the fifteenth thyristor (V15) is connected to a second end of the sixteenth thyristor (V16), the second end of the eleventh thyristor (V11), and the second end of the twelfth thyristor (V12);
a first end of the sixteenth thyristor (V16) is respectively connected to a second end of the eighteenth thyristor (V18) and the second phase inductor of the compressor (151), and a second end of the sixteenth thyristor (V16) is connected to the second end of the fifteenth thyristor (V15), the second end of the eleventh thyristor (V11), and the second end of the twelfth thyristor (V12);
a first end of the seventeenth thyristor (V17) is connected to a first end of the eighteenth thyristor (V18), the first end of the thirteenth thyristor (V13), and the first end of the fourteenth thyristor (V14), and the second end of the seventeenth thyristor (V17) is respectively connected to the first end of the fifteenth thyristor (V15) and the second phase inductor of the compressor (151);
the first end of the eighteenth thyristor (V18) is connected to the first end of the seventeenth thyristor (V17), the first end of the thirteenth thyristor (V13), and the first end of the fourteenth thyristor (V14), and the second end of the eighteenth thyristor (V18) is respectively connected to the first end of the sixteenth thyristor (V16) and a third phase inductor of the compressor (151); and
the first end of the twelfth thyristor (V12) and the second end of the fourteenth thyristor (V14) are respectively connected to a first phase inductor of the compressor (151).

17. The power battery system (100) according to any one of claims 11 to 16, wherein the buck module (160) comprises: a fifth inductor (L5), a diode (162), and a MOS transistor (161);
one end of the fifth inductor (L5) is connected to a positive electrode of the low-voltage storage battery (163), and the other end of the fifth inductor (L5) is respectively connected to a drain of the MOS transistor (161) and a cathode of the diode (162);
a source of the MOS transistor (161) is connected to the second end of the first thyristor (V1), the second end of the second thyristor (V2), the second end of the third thyristor (V3), the second end of the seventh thyristor (V7), and the second end of the eighth thyristor (V8); and
the cathode of the diode (162) is respectively connected to the other end of the fifth inductor (L5) and the drain of the MOS transistor (161), and an anode of the diode (162) is connected to a negative electrode of the low-voltage storage battery (163), the first end of the fourth thyristor (V4), the first end of the fifth thyristor (V5), the first end of the sixth thyristor (V6), the first end of the ninth thyristor (V9), and the first end of the tenth thyristor (V10).

18. The power battery system (100) according to any one of claims 12 to 16, wherein the motor controller (170) comprises: a nineteenth thyristor (V19), a twentieth thyristor (V20), a twenty-first thyristor (V21), a twenty-second thyristor (V22), a twenty-third thyristor (V23), and a twenty-fourth thyristor (V24);
a first end of the nineteenth thyristor (V19) is respectively connected to a first phase inductor of the drive motor (171) and a second end of the twenty-second thyristor (V22), and a second end of the nineteenth thyristor (V19) is connected to the second end of the eleventh thyristor (V11), the second end of the twelfth thyristor (V12), a second end of the twentieth thyristor (V20), a second end of the twenty-first thyristor (V21), and a positive electrode of the battery pack (120);
a first end of the twentieth thyristor (V20) is respectively connected to a second phase inductor of the drive motor (171) and a second end of the twenty-third thyristor (V23), and the second end of the twentieth thyristor (V20) is connected to the second end of the eleventh thyristor (V11), the second end of the twelfth thyristor (V12), the second end of the nineteenth thyristor (V19), the second end of the twenty-first thyristor (V21), and the positive electrode of the battery pack (120);
a first end of the twenty-first thyristor (V21) is respectively connected to a third phase inductor of the drive motor (171) and a second end of the twenty-fourth thyristor (V24), and the second end of the twenty-first thyristor (V21) is connected to the second end of the eleventh thyristor (V11), the second end of the twelfth thyristor (V12), the second end of the nineteenth thyristor (V19), the second end of the twentieth thyristor (V20), and the positive electrode of the battery pack (120);
a first end of the twenty-second thyristor (V22) is connected to the first end of the thirteenth thyristor (V13), the first end of the fourteenth thyristor (V14), a first end of the twenty-third thyristor (V23), a first end of the twenty-fourth thyristor (V24), and a negative electrode of the battery pack (120), and the second end of the twenty-second thyristor (V22) is respectively connected to the first end of the nineteenth thyristor (V19) and the first phase inductor of the drive motor (171);
the first end of the twenty-third thyristor (V23) is connected to the first end of the thirteenth thyristor (V13), the first end of the fourteenth thyristor (V14), the first end of the twenty-second thyristor (V22), the first end of the twenty-fourth thyristor (V24), and the negative electrode of the battery pack (120), and the second end of the twenty-third thyristor (V23) is respectively connected to the first end of the twentieth thyristor (V20) and the second phase inductor of the drive motor (171); and
the first end of the twenty-fourth thyristor (V24) is connected to the first end of the thirteenth thyristor (V13), the first end of the fourteenth thyristor (V14), the first end of the twenty-second thyristor (V22), the first end of the twenty-third thyristor (V23), and the negative electrode of the battery pack (120), and the second end of the twenty-fourth thyristor (V24) is respectively connected to the first end of the twenty-first thyristor (V21) and the third phase inductor of the drive motor (171).

19. The power battery system (100) according to claim 5, wherein the power battery system (100) further comprises:
a fourth capacitor (C4), the fourth capacitor (C4) being respectively connected in parallel to the alternating current charging module (140) and the compressor controller (150).

20. The power battery system (100) according to claim 18, wherein the motor controller (170) further comprises:
a fifth capacitor (C5), one end of the fifth capacitor (C5) being connected to the second end of the nineteenth thyristor (V19), the second end of the twentieth thyristor (V20), and the second end of the twenty-first thyristor (V21), and the other end of the fifth capacitor (C5) being connected to the first end of the twenty-second thyristor (V22), the first end of the twenty-third thyristor (V23), and the first end of the twenty-fourth thyristor (V24); and
the fifth capacitor (C5) being further connected in parallel to the battery pack (120).

21. An electric vehicle (1000), comprising the power battery system (100) according to any one of claims 1 to 20.
